# EUROPEAN PATENT APPLICATION

(11) **EP 1 349 398 A1**
(43) Date of publication of application: **01.10.2003**
(21) Application number: 02252233.8
(22) Date of filing: 27.03.2002
(51) Int. Cl.: H04N 7/64, H04N 7/50

(54) **Video processing**

(71) Applicant: BRITISH TELECOMMUNICATIONS public limited company, London EC1A 7AJ (GB)
(72) Inventor: The designation of the inventor has not yet been filed
(74) Representative: Wallin, Nicholas James

(57) **Abstract**

A method of video processing comprising: receiving video data; encoding the video data; transmitting the encoded video data; receiving encoded video data; and decoding the encoded video data. In the invention, the encoded video data is decoded until a first error in the encoded video data is detected. In response to the detection of an error, encoded video data subsequent to the first error is altered and an attempt to decode the altered encoded video data is made. The data alteration step is repeated until either all the encoded video data is decoded or until an attempt to decode the encoded video data is unsuccessful, so reducing the amount of encoded video data that is skipped in decoding due to error detection.

## Description

This invention relates to video decoding and in particular to methods and apparatus for detecting, isolating and repairing errors within a video bitstream.

A video sequence consists of a series of still pictures or frames. Video compression methods are based on reducing the redundant and the perceptually irrelevant parts of video sequences. The redundancy in video sequences can be categorised into spectral, spatial and temporal redundancy. Spectral redundancy refers to the similarity between the different colour components of the same picture. Spatial redundancy results from the similarity between neighbouring pixels in a picture. Temporal redundancy exists because objects appearing in a previous image are also likely to appear in the current image. Compression can be achieved by taking advantage of this temporal redundancy and predicting the current picture from another picture, termed anchor or reference picture. Further compression may be achieved by generating motion compensation data that describes the displacement between areas of the current picture and similar areas of the reference picture.

Frames coded without reference to another frame are known as intra-frames (also known as I-frames). Pictures that are compressed using temporal redundancy techniques are generally referred to as inter-pictures or inter-frames (also known as P-frames). Parts of an inter-picture can also be encoded without reference to another frame (known as intra-refresh).

Sufficient compression cannot usually be achieved by only reducing the inherent redundancy of a sequence. The redundancy of the encoded bit stream is usually therefore further reduced by means of efficient lossless coding of compression parameters. The main technique is to use variable length codes.

Compressed video is usually corrupted by transmission errors, mainly for two reasons. Firstly, due to utilisation of temporal predictive differential coding (interframe coding) an error is propagated both spatially and temporally. In practise this means that, once an error occurs, it is usually visible to the human eye for a relatively long time. Especially susceptible are transmissions at low bit rates where there are only a few intra-coded frames, so temporal error propagation is not stopped for some time. Secondly, the use of variable length codes increases susceptibility to errors. When a bit error alters the code word, the decoder will lose code word synchronisation and also decode subsequent error-free code words (comprising several bits) incorrectly until the next synchronisation (or start) code. A synchronisation code is a bit pattern which cannot be generated from any legal combination of other code words and such start codes are added to the bit stream at intervals to enable resynchronisation. In addition, errors occur when data is lost during transmission. For example, for video applications using an unreliable transport protocol such as UDP in IP Networks, network elements may discard parts of the encoded bit stream.

The transmission of video data over networks prone to transmission errors (for instance mobile networks) is subject to channel errors and channel congestion. Even a low Bit Error Rate (BER) can produce a significant degradation of video quality. Whilst channel error may cause significant visual impairments, it is undesirable to request a transmitting device to retransmit the corrupted data as any re-transmitted information is likely to be subject to similar channel degradation and also processing and transmitting resources may be unnecessarily occupied when other data is to be transmitted. Thus techniques have been developed to detect, isolate and/or conceal errors at a decoder.

There are many ways for the receiver to address the corruption introduced in the transmission path. In general, on receipt of the signal, transmission errors are first detected and then corrected or concealed by the receiver. Error correction refers to the process of recovering the erroneous data preferably as if no errors had been introduced in the first place. Error concealment refers to the process of concealing the effects of transmission errors so that they are hardly visible in the reconstructed video sequence. Typically an amount of redundancy is added by the source transport coding in order to help error detection, correction and concealment.

Current video coding standards define a syntax for a self-sufficient video bit-stream. The most popular standards at the time of writing are ITU-T Recommendation H.263, "Video coding for low bit rate communication", February 1998; ISO/IEC 14496-2, "Generic Coding of Audio-Visual Objects. Part 2: Visual", 1999 (known as MPEG-4); and ITU-T Recommendation H.262 (ISO/IEC 13818-2) (known as MPEG-2). These standards define a hierarchy for bit-streams and correspondingly for image sequences and images.

In accordance with the invention there is provided a method of video processing comprising:
receiving video data;
encoding the video data;
transmitting the encoded video data;
receiving encoded video data;
decoding the encoded video data until a first error in the encoded video data is detected and identifying an error-containing portion of the encoded video data;
in response to the detection of an error, altering encoded video data within the identified error-containing portion and attempting to decode the altered encoded video data,
repeating the data alteration step within the error-containing portion until either all the encoded video data within the error containing portion is decoded or until an attempt to decode the encoded video data within the error containing portion is unsuccessful.

Thus the amount of encoded video data that is skipped in decoding due to error detection is reduced as an attempt is made to resolve the error by altering the video data including the error.

In a second aspect of the invention there is provided a method of decoding an encoded video signal comprising:
receiving encoded video data
decoding the encoded video data until a first error in the encoded video data is detected and identifying an error-containing portion of the encoded video data;
in response to the detection of an error, altering encoded video data within the identified error-containing portion and attempting to decode the altered encoded video data,
repeating the data alteration step within the error-containing portion until either all the encoded video data within the error containing portion is decoded or until an attempt to decode the encoded video data within the error containing portion is unsuccessful.

Preferably, when a first error is detected, the encoded video data is decoded from the opposite end of the bit stream until a second error is detected.

Preferably the encoded video data is encoded using a reversible code, such as a reversible variable length code and/or a symmetrical code.

The video data may be encoded in segments with the data alteration step being carried out for each segment individually.

Preferably the video data is encoded in a digital format (e.g. binary) and the alteration step comprises changing the value of a bit in the video data (e.g. from a 1 to a 0 or vice versa).

According to a further aspect of the invention there is provided a system of video processing comprising:
an input for receiving video data;
an encoder for encoding the video data;
a decoder arranged to:
   decode the encoded video data until a first error in the encoded video data is detected;
   identify an error-containing portion of the encoded video data;
   in response to the detection of an error, alter encoded video data within the identified error-containing portion and attempt to decode the altered encoded video data,
   repeat the data alteration step within the error-containing portion until either all the encoded video data within the error containing portion is decoded or until an attempt to decode the encoded video data within the error containing portion is unsuccessful.

According to a further aspect of the invention there is provided a video decoder arranged to:
decode the encoded video data until a first error in the encoded video data is detected;
identify an error-containing portion of the encoded video data;
in response to the detection of an error, alter encoded video data within the identified error-containing portion and attempt to decode the altered encoded video data,
repeat the data alteration step within the error-containing portion until either all the encoded video data within the error containing portion is decoded or until an attempt to decode the encoded video data within the error containing portion is unsuccessful.

The invention will now be described, by way of example only, with reference to the accompanying drawings, in which:
Figure 1 shows a multimedia mobile communications system;
Figure 2 shows an example of the multimedia components of a multimedia terminal;
Figure 3 shows an example of a video codec;
Figure 4 shows an example of error isolation in a corrupted bit stream; and
Figure 5 shows an example of the structure of a bit stream compliant with H.263; and
Figure 6 shows a further example of error isolation in a corrupted bit stream.

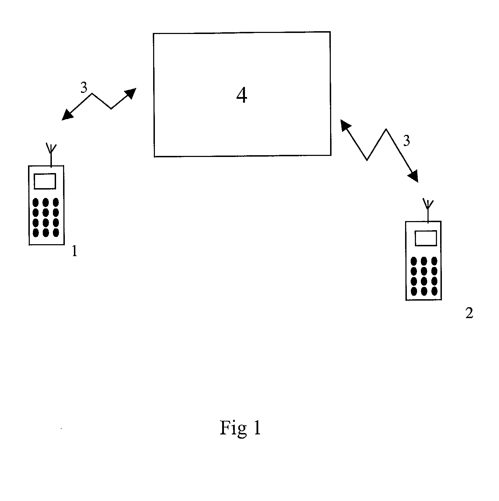

Figure 1 shows a typical multimedia mobile communications system. A first multimedia mobile terminal 1 communicates with a second multimedia mobile terminal 2 via a radio link 3 to a mobile communications network 4. Control data is sent between the two terminals 1,2 as well as the multimedia data.

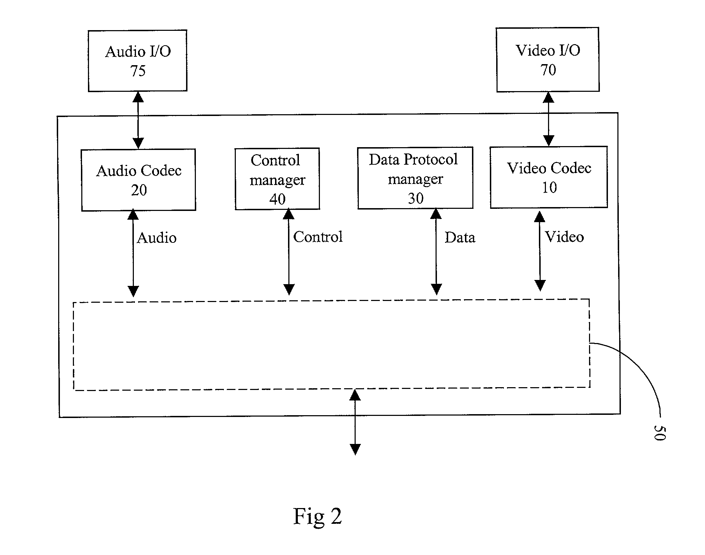

Figure 2 shows the typical multimedia components of a terminal 1. The terminal comprises a video codec 10, an audio codec 20, a data protocol manager 30, a control manager 40, a multiplexer/demultiplexer 50 and a modem 60 (if the required). For packet-based transport networks (e.g. IP based-networks) the multiplexer/demultiplexer 50 and modem 60 are not required.

The video codec 10 receives signals for coding from a video capture or storage device of the terminal (not shown) (e.g. a camera) and receives signals for decoding from a remote terminal 2 for display by the terminal 1 on a display 70. The audio codec 20 receives signals for coding from the microphone (not shown) of the terminal 1 and receive signals for decoding from a remote terminal 2 for reproduction by a speaker (not shown) of the terminal 1. The terminal may be a portable radio communications device, such as a radio telephone.

The control manager 40 controls the operation of the video codec 10, the audio codec 20 and the data protocols manager 30. However, since the invention is concerned with the operation of the video codec 10, no further discussion of the audio codec 20 and protocol manager 30 will be provided.

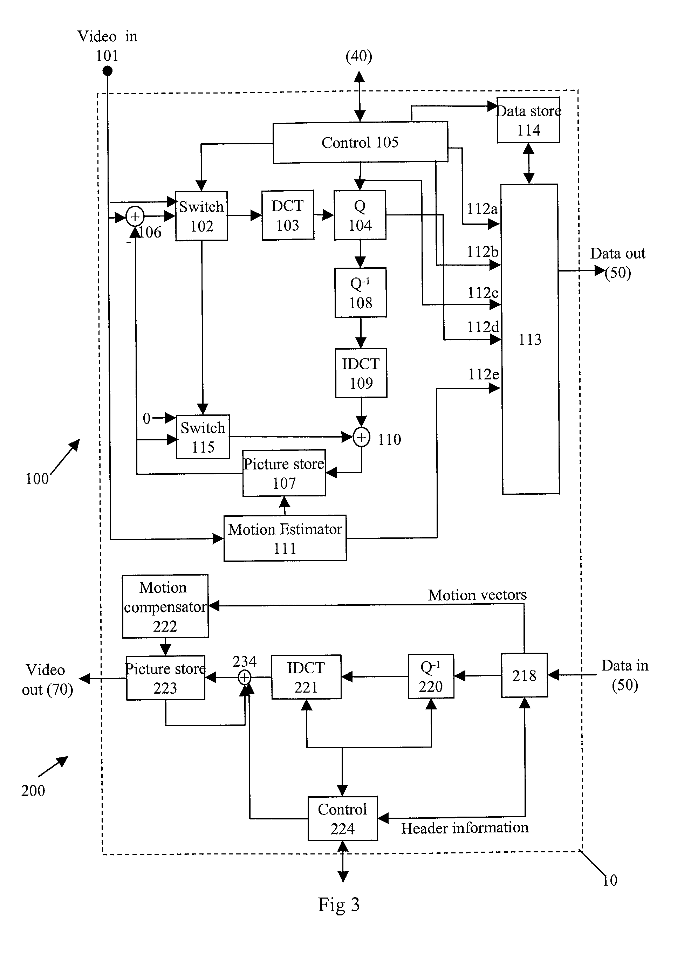

Figure 3 shows an example of a video codec 10 according to the invention. Since H.263 is a widely adopted standard for video in low bit-rate environments, the codec will be described with reference to H.263. However, it is not intended that the invention be limited to this standard.

The video codec comprises an encoder part 100 and a decoder part 200. The encoder part 100 comprises an input 101 for receiving a video signal from a camera or video source of the terminal 1. A switch 102 switches the encoder between an INTRA-mode of coding and an INTER-mode. The encoder part 100 of the video codec 10 comprises a DCT transformer 103, a quantiser 104, an inverse quantiser 108, an inverse DCT transformer 109, an adder 110, one or more picture stores 107, a subtractor 106 for forming a prediction error, a switch 113 and an encoding control manager 105.

The operation of an encoder according to the invention will now be described. The video codec 10 receives a video signal to be encoded. The encoder 100 of the video codec encodes the video signal by performing DCT transformation, quantisation and motion compensation. The encoded video data is then output to the multiplexer 50. The multiplexer 50 multiplexes the video data from the video codec 10 and control data from the control 40 (as well as other signals as appropriate) into a multimedia signal. The terminal 1 outputs this multimedia signal to the receiving terminal 2 via the modem 60 (if required).

In INTRA-mode, the video signal from the input 101 is transformed to DCT coefficients by a DCT transformer 103. The DCT coefficients are then passed to the quantiser 104 that quantises the coefficients. Both the switch 102 and the quantiser 104 are controlled by the encoding control manager 105 of the video codec, which may also receive feedback control from the receiving terminal 2 by means of the control manager 40. A decoded picture is then formed by passing the data output by the quantiser through the inverse quantiser 108 and applying an inverse DCT transform 109 to the inverse-quantised data. The resulting data is added to the contents of the picture store 107 by the adder 110.

In INTER mode, the switch 102 is operated to accept from the subtractor 106 the difference between the signal from the input 101 and a reference picture which is stored in a picture store 107. The difference data output from the subtractor 106 represents the prediction error between the current picture and the reference picture stored in the picture store 107. A motion estimator 111 may generate motion compensation data from the data in the picture store 107 in a conventional manner.

The encoding control manager 105 decides whether to apply INTRA or INTER coding or whether to code the frame at all on the basis of either the output of the subtractor 106 or in response to feedback control data from a receiving decoder. The encoding control manager may decide not to code a received frame at all when the similarity between the current frame and the reference frame is so high or there is not time to code the frame. The encoding control manager operates the switch 102 accordingly.

When not responding to feedback control data, the encoder typically encodes a frame as an INTRA-frame either only at the start of coding (all other frames being inter-frames), or at regular periods e.g. every 5s, or when the output of the subtractor exceeds a threshold i.e. when the current picture and that stored in the picture store 107 are judged to be too dissimilar. The encoder may also be programmed to encode frames in a particular regular sequence e.g. I P P P P I P etc.

The video codec outputs the quantised DCT coefficients 112a, the quantising index 112b (i.e. the details of the quantising used), an INTRA/INTER flag 112c to indicate the mode of coding performed (I or P), a transmit flag 112d to indicate the number of the frame being coded and the motion vectors 112e for the picture being coded. These are multiplexed together by the multiplexer 50 together with other multimedia signals.

The decoder part 200 of the video codec 10 comprises an inverse quantiser 220, an inverse DCT transformer 221, a motion compensator 222, one or more picture stores 223 and a controller 224. The controller 224 receives video codec control signals demultiplexed from the encoded multimedia stream by the demultiplexer 50. In practice the controller 105 of the encoder and the controller 224 of the decoder may be the same processor.

Considering the terminal 1 as receiving coded video data from terminal 2, the operation of the video codec 10 will now be described with reference to its decoding role. The terminal 1 receives a multimedia signal from the transmitting terminal 2. The demultiplexer 50 demultiplexes the multimedia signal and passes the video data to the video codec 10 and the control data to the control manager 40. The decoder 200 of the video codec decodes the encoded video data by inverse quantising, inverse DCT transforming and motion compensating the data. The controller 224 of the decoder checks the integrity of the received data and, if an error is detected, attempts to correct or conceal the error in a manner to be described below. The decoded, corrected and concealed video data is then stored in one of the picture stores 223 and output for reproduction on a display 70 of the receiving terminal 1.

In H.263, the bit stream hierarchy has four layers: block, macroblock, picture segment and picture layer. A block relates to 8 × 8 pixels of luminance or chrominance. Block layer data consist of uniformly quantised discrete cosine transform coefficients, which are scanned in zigzag order, processed with a run-length encoder and coded with variable length codes.

A macroblock relates to 16 x 16 pixels (or 2 x 2 blocks) of luminance and the spatially corresponding 8 x 8 pixels (or block) of chrominance components.

The picture segment layer can either be a group of blocks (GOB) layer or a slice layer. Each GOB or slice is divided into macroblocks. Data for each GOB consists of an optional GOB header followed by data for macroblocks. If the optional slice structured mode is used, each picture is divided into slices instead of GOBs. A slice contains a number of macroblocks but has a more flexible shape and use than GOBs. Slices may appear in the bit stream in any order. Data for each slice consists of a slice header followed by data for the macroblocks.

The picture layer data contain parameters affecting the whole picture area and the decoding of the picture data. Most of this data is arranged in a so-called picture header.

MPEG-2 and MPEG-4 layer hierarchies resemble the one in H.263.

Errors in video data may occur at any level and error checking may be carried out at any or each of these levels.

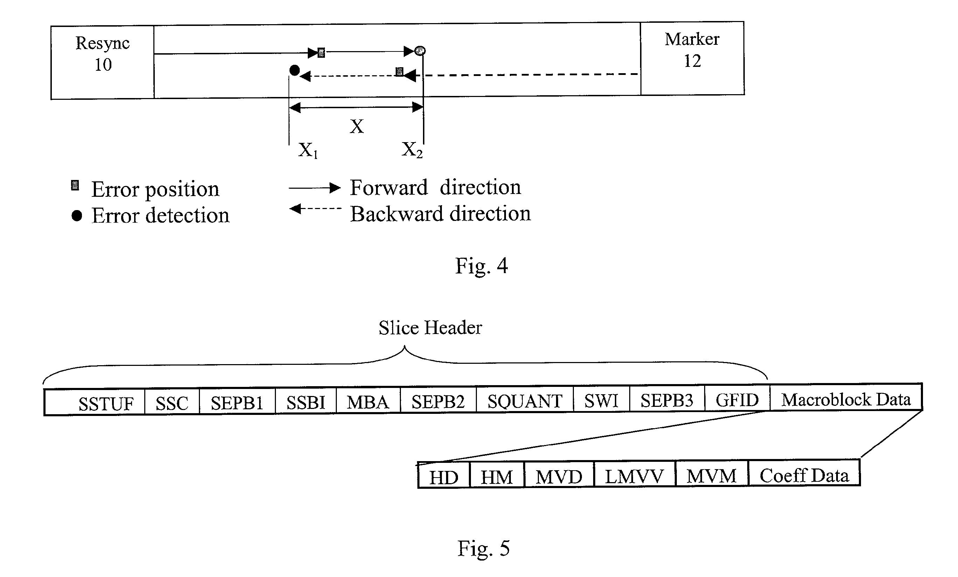

Reversible Variable Length Coding (RVLC) is a technique that has been developed in which a decoder can both decode bits after a resynchronisation codeword in a forward direction and also decode the bits before the next resynchronisation codeword from a backward direction. As shown in Figure 4, decoding of encoded video data is first carried out in a forward direction from a resynchronisation code 10 until an error is detected (in Figure 4 the point at which an error is detected is indicated by •). The decoder then goes to the next marker 12 and decodes the received signal before the marker in a backward direction until an error is detected. In low bit error rate environments (e.g. BER<10⁻³) it is unlikely than more than two errors occur in a portion of the encoded video occurring between two synchronisation codes or markers. Therefore, the assumption is made that the encoded video data is error free prior to the detection of the error in the reverse direction (i.e. prior to X₂) and error free after the detection of the error in the forward direction (i.e. after X₁). The data between the two detected errors is usually discarded by the decoder. In the invention on the other hand, this technique is taken one stage further.

In a first embodiment of the invention, the picture segment is a slice and the data partitioned slice (DPS) mode (Annex V of H.263) is implemented. When data partitioned slice mode is used, the data is arranged as a video picture segment and the macroblocks in the segment are rearranged so that header information for all the macroblocks in the segment are transmitted together followed by the motion vectors for all the macroblocks in the segment and then by the DCT coefficients for the macroblocks in the segment. The header, motion vector and DCT partitions are separated by markers, allowing for resynchronisation at the end of a partition in which an error occurred. Each segment contains the data for an integer number of macroblocks.

The data structure for this DPS mode is as shown in Figure 5. The data comprises a slice header followed by macroblock data. The slice header includes the following fields:
SSTUF, a code word of variable length and used directly before an SSC code word whenever needed to ensure that the SSC is byte-aligned;
SSC, Slice Start Code, a word of 17 bits of value 0000 0000 0000 0000 1;
Slice Emulation Prevention Bits, SEPB1, SEPB2, SEPB3, each a single bit always having the value of 1 in order to prevent start code emulation;
SSBI, Slice Sub-Bit Stream Indicator, a codeword of 4 bits used in Continuous Presence Multipoint and Video Multiplex operation;
MBA, Macroblock Address, a code word representative of the macroblock number of the first macroblock in the current slice as counted from the beginning of the picture;
SQUANT, Quantiser Information, a fixed length code word of 5 bits which indicates the quantiser to be used for that slice;
SWI, Slice Width Indication in Macroblocks, a code word present only if a rectangular slice sub mode is active;
GFID, the frame identifier, which has the same value in every slice header of a given picture.

The macroblock data comprises the following fields: HD, Header Data, contains the COD and MCBPC information for all the macroblocks in the slice. The COD is set to 0 when the macroblock is coded and set to 1 if no further information is transmitted for a macroblock. MCBPC, is a code word giving information about the macroblock type and the coded block pattern for chrominance. In Annex V of H.263, a reversible variable length code (RVLC) is used to combine the COD and the MCBPC for all the macroblocks in the packet.

The macroblock data next comprises a header marker (HM) which is a fixed code word of 9 bits. The HM terminates the header partition. When reverse coding is used by a decoder, the decoder searches for this marker. The motion vector data (MVD) uses RVLC code words. The last motion vector value (LMVV) contains the last motion vector in the packet. It is coded using a predictor value of 0 for both the horizontal and vertical components. The motion vector marker (MVM) is a code word of 10 bits having a fixed non-symmetrical value. The MVM terminates the motion vector partition. When reverse coding is used in a decoder, the decoder searches for this marker. The coefficient data comprises further header data and the DCT coefficients for the macroblocks.

Say there are 11 macroblocks in a slice arranged as 1x1 macroblocks. Thus, in the macroblock data, the HD field should include header data for all 11 macroblocks of the slice followed by the header marker HM. A receiving decoder therefore tries to decode 11 headers and checks that the next data received is the header marker. If an error is detected in the header data, or the decoder manages to decode the header data for 11 macroblocks but this data is not followed by a header marker, the data is deemed to be corrupted. The decoder then starts from the header marker and decodes in the reverse direction until a point in the data is reached at which another error is detected. Thus, an intermediate portion of code labelled X in Figure 4 is identified which includes a possible error.

According to the invention, the decoder starts to insert "errors" into the bit stream until a valid possible solution is found. This is first done in the forward direction starting from the end of the last correctly decoded code word of the bit stream before the error was detected in the reverse direction. That is to say, from the end of the valid code word occurring before point X₁ in the bit stream. The decoder flips the value of the next occurring bit and determines if that is the start of a valid code word, taking into account the bits following the flipped bit. This continues until the insertion of an error into the bit stream does not result in a valid code. The decoder then inserts errors in the reverse direction, starting from the bit before the beginning of the first valid code word after X₂. The decoder continues to insert errors in the reverse direction, until the insertion of an error does not result in a valid code word. If error insertion in the forward and the reverse direction both finish at the same place in the bit stream, the error will be recovered. Otherwise, the error containing portion X is usually reduced (as compared with not applying the invention). Any macroblocks occurring in the isolated area X will be skipped. Thus, when subsequently decoding in the forward direction, when the isolated area of code is arrived at the motion blocks are skipped until the error free region of the data is resumed.

The invention will now be described with reference to an example bit stream. The example uses the table of valid code words as set out in table V.2 of Annex V (Data Partition Slice Mode) of H.263. For this example, only the macroblock header data will be considered. It will be clear to a person skilled in the art however that the invention may equally be applied to other data e.g. the motion vector data or the coefficient data.

In this example, the transmitted data is limited to the following three valid code words for the Header data:
- 1: skipped MB
- 010: Inter MB CBPC= 0 (colour info)
- 011110: Inter MB CBPC= 3

Say the transmitted header information for a segment of data is as follows:

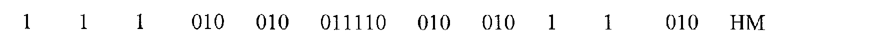

An error occurs in the bit stream during transmission (shaded grey below) and the following bit stream is received :

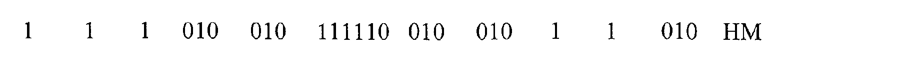

The method has four steps, the first two steps look for the error-free bits at the beginning and at the end of the partition, the final two steps insert "virtual" errors, first in the forward direction and then in the backward direction.

### 1) Getting the backward initial position.

The first step of the method is to find the error-free bits that are at the beginning and at the end of the header partition.

The decoder starts by working in the forward direction, looking for valid header data code words (indicated by ---):

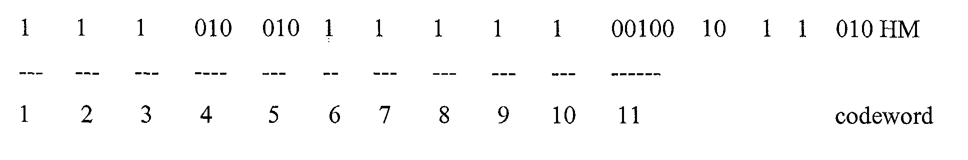

In this case the expected number of header codes have been found (i.e 11) but the last one (no. 11) is not followed by the marker HM. Therefore an error is detected. The bits after the last position code word (no.11) are considered to be error-free bits i.e. the end of the 11th code word corresponds to position X₁ in Figure 4. These bits are underlined in the bit stream below:

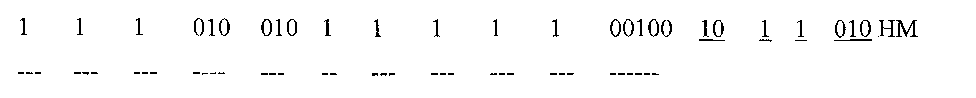

### 2) Getting the forward initial position.

Doing the same process in the backward direction, starting from HM, the other initial position is found:

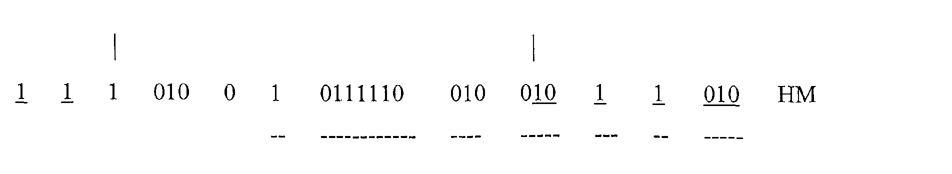

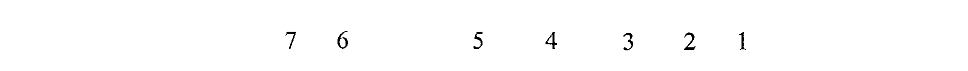

After the seventh code word identified in the reverse direction, there is bit pattern 10100, which is not a valid code word so an error has occurred. All the data after this point (shown underlined) is considered to be error-free i.e. corresponds to point X₂ in Figure 4. Thus the error has been isolated as occurring in portion X between the end of the second macroblock from the beginning of the header data and the end of the eleventh code word in the forward direction.

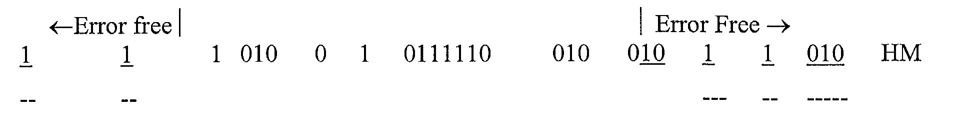

### 3) Flipping bits in forward sense. Getting the first isolation position.

Now the decoder starts the flipping bit process in the forward direction from the end of the error-free data (i.e. the data underlined) (the flipped bit is shown in bold):

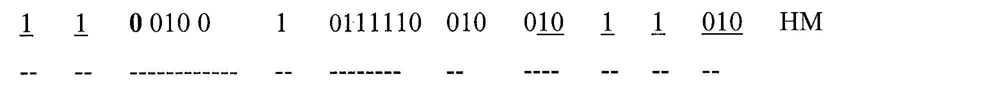

With this new bit stream, ten valid header codes can be detected before the marker HM and not eleven. As this is not a possible solution, the flipped bit is reverted to its original value of 1 and the next bit is then flipped:

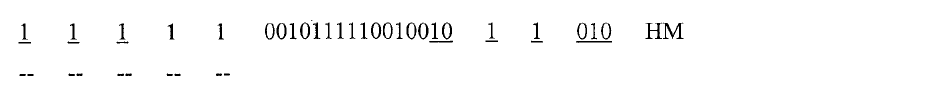

Only 5 possible HD code words are found before an invalid bit pattern. So the flipped bit is reverted to its original value of 1 and the next bit is then flipped:

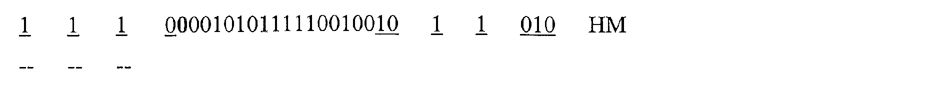

Only 3 possible HD code words are found before an invalid bit pattern. So the flipped bit is reverted to its original value of 1 and the next bit is then flipped:

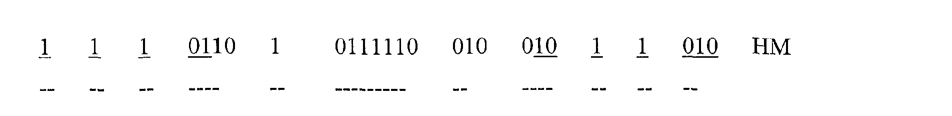

This is a possible solution to the error (as 11 valid header codes have been identified) and defines the first isolation position (shown in bold and underline below).

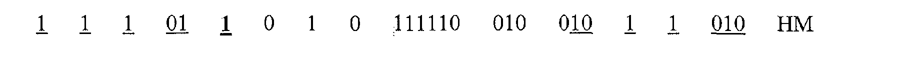

The decoder then carries out the bit flipping process in the reverse direction, beginning from the bit after the backward initial position.

### 4) Flipping bits in backward sense. Getting the second isolation position.

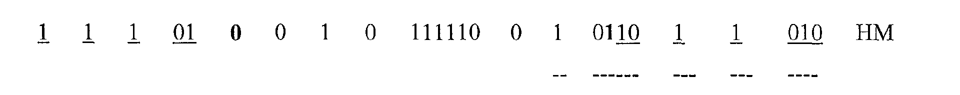

Flipping the bit to 1 produces an invalid code word so this is not a possible solution. The bit is reverted to its original value 0 and the next bit is flipped.

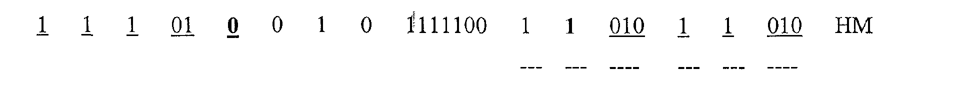

This results in 6 valid code words followed by an error so the bit is reverted to its original value and the next bit is flipped.

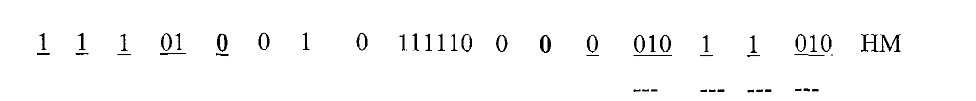

This results in 4 valid code words followed by an error so the bit is reverted to its original value and the next bit is flipped.

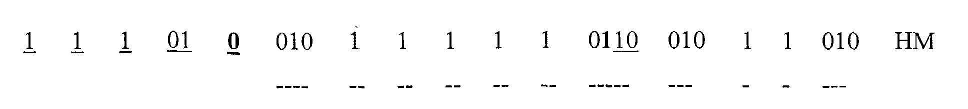

This time 11 macroblock header code words have been decoded but still not all of the information has been used so an error still exists. So the bit is reverted to its original value and the next bit is flipped.

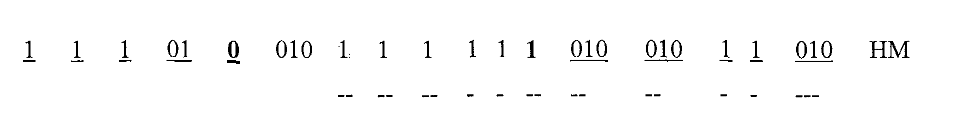

This also results in 11 header codes but the whole partition data has not been used. The bit is reverted to its original value and the next bit is flipped.

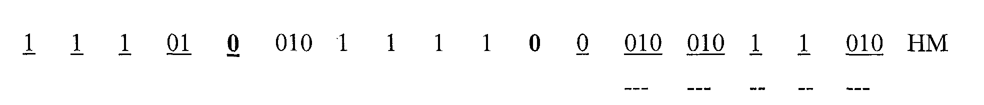

This results in 5 valid code words followed by an error so the bit is reverted to its original value and the next bit is flipped.

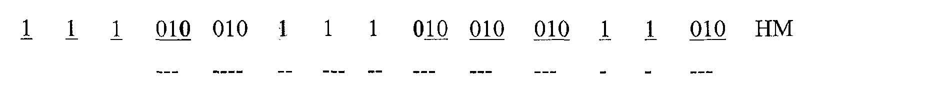

Also decodes to 11 MB header codes but does not use the whole header data

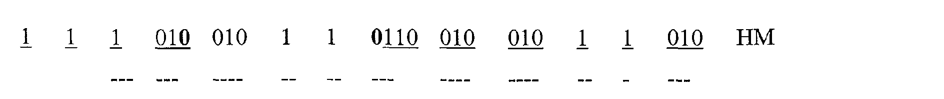

Again 11 HD code words but not using the whole of the header data.

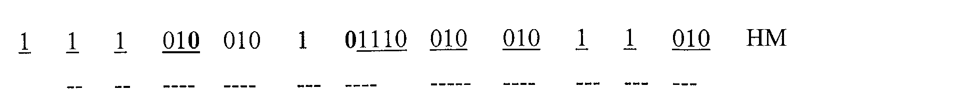

Again 11 HD code words but not using the whole of the header data.

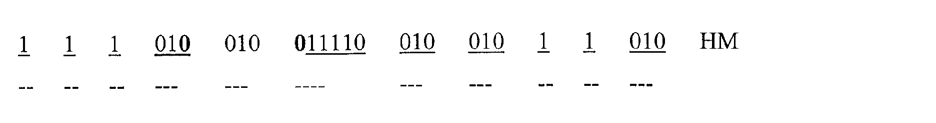

Again 11 HD code words have been identified and this time all the header data has been used so this is a possible solution. The bits shown in bold in the table above are possible solutions to the error. However in a low BER situation, only one error is likely to occur per slice. Since the decoder does not know which bit should be flipped - the one to form 010 as a fourth macroblock header or the one to form 011110 to form the sixth macroblock header - the decoder sets the error isolation boundary as from the end of the third code word and the beginning of the seventh.

Thus the error isolation method has reduced the amount of data that is considered to include an error from that between the forward initial position and the backward initial position to that shown between the bold and underlined bits below.

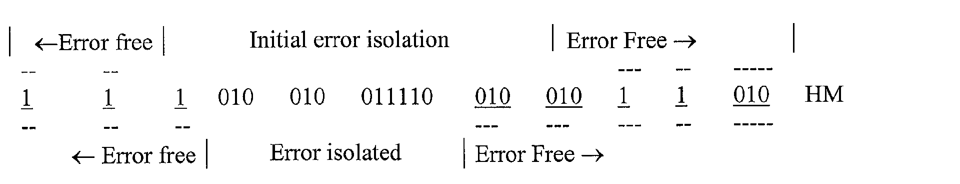

Therefore the first three macroblocks are decoded (with their associated motion and coefficient data), the next three macroblocks are skipped and the final five macroblocks are decoded.

Since the decoder knows that three macroblocks have been skipped, the decoder may set the macroblock header data for each of these three blocks to the code word 010 which signifies that the macroblock is encoded in an INTER manner but has no associated DCT data. Thus any motion vector information associated with macroblocks deemed to include an error may be used but any DCT is ignored. Generally one motion vector may be encoded per macroblock. Thus, when the number of decoded motion vectors equals the sum of the number of decoded INTER MB headers plus the number of skipped MB headers, then the decoder knows that the skipped MB headers relate to macroblocks encoded in an INTER manner. The decoder can therefore use the motion vector data for the skipped macroblocks. In the above example, in which 11 macroblocks are coded per slice and eight macroblocks headers have been decoded successfully (and three have been unsuccessful), say that all of the eight successfully decoded MB headers have a MCBPC that indicates that the macroblocks are encoded in an INTER manner. Say the decoder decodes the motion vector data which results in data for 11 macroblocks. Since the number of decoded motion vectors (11) equals the sum of the number of decoded INTER MB headers (8) plus the number of skipped MB headers (3) then the decoder knows that the skipped macroblocks were encoded in an INTER manner and uses the motion data for the skipped macroblocks to decode the skipped macroblocks.

This is generally true as well for cases in which more than one motion vector is sent per macroblock: if the number of decoded motion vectors equals the sum of the number of decoded INTER MB headers plus the number of skipped MB headers multiplied by the number of motion vectors per macroblock, then the motion vector data may be used with respect to the skipped macroblocks.

Equally, when all of the macroblock header data is decoded successfully and an error is isolated in the motion vector data, the successfully decoded motion vector data may be used with the successfully decoded header data. Thus if error isolation results in say 5 motion vectors when decoded in a forward direction and 4 when decoded in the reverse direction and the header data indicates that all of the macroblocks were encoded in an INTER manner, then the decoder uses the first five motion vectors to decode the first five macroblocks and the other motion vectors to decode the last 4 macroblocks. If, for instance, the MB header data indicated that MB₁₋₇ and MB₉₋₁₁ were encoded in an INTER manner and MB₈ was encoded in an INTRA manner, then the decoder would apply the first five motion vectors to MB₁₋₅ and the last five motion vectors to MB_{7, 9-11} since the decoder knows from the successfully decoded header data that MB₈ was encoded in an INTRA manner.

Thus errors are inserted by the decoder into the bit stream in which an error has been detected by flipping the bits (i.e. converting 1 to 0 and vice versa), until a non-valid code word results.

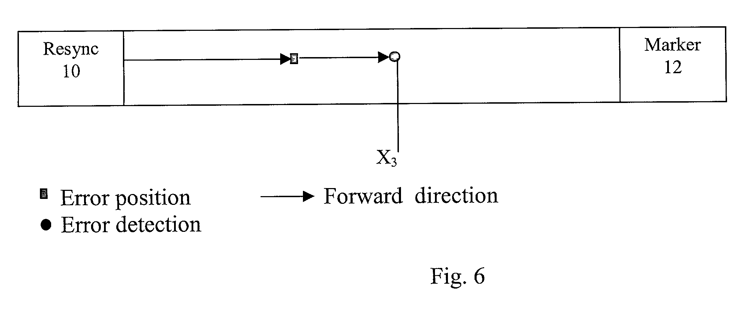

The above embodiment relates to a situation in which RVLC is used, so enabling the decoder to isolate an error-containing portion X from a forward direction and a reverse direction. However the invention does not require the use of reversible codes. For instance, as shown in Figure 6, decoding of encoded video is carried out in a forward direction until an error is detected (at X₃). In a low BER environment, it is unlikely that a further error will occur in the remaining portion of the video segment. Therefore the assumption is made that the encoded video data is error free after the detection of the error in the forward direction and that the video data before X₃ contains an error.

According to the invention, the data before X₃ is therefore altered in the manner described above until no further valid code word is producible (so reducing the error error-containing portion).

The invention is also applicable to the GOB mode defined in H.263 etc. In this mode, the data structure for each group of blocks consists of a GOB header followed by data for the macroblocks of the GOB N (MB data N) . Each GOB contains one or more rows of macroblocks. The GOB header includes: GSTUF, a codeword of variable length to provide byte alignment; GBSC, a Group of Block start code, which is a fixed codeword of seventeen bits 0000 0000 0000 0000 1; GN, the number of the GOB being coded; GFID, the GOB frame identifier which has the same value for all GOBs of the same picture; and GQUANT, a fixed length codeword which indicates the quantiser to be used for the decoder. Following the GOB header is the macroblock data which consists of a macroblock header followed by data for the blocks of the macroblock.

A decoder according to the invention starts to decode the data for a GOB by identifying the GBSC and decoding the macroblock data after the header. If an error containing portion of the macroblock data is identified, then the decoder inserts errors into the portion of the encoded data containing the error in a manner as described above, in an attempt to reduce the error containing portion of the video data.

The invention is not intended to be limited to the video coding protocols discussed above: these are intended to be merely exemplary. The operation of the decoder as described above allows a receiving decoder to reduce the amount of erroneous data that is discarded if a bit stream is corrupted.

## Claims

1. A method of video processing comprising:
receiving video data;
encoding the video data;
transmitting the encoded video data;
receiving encoded video data;
decoding the encoded video data until a first error in the encoded video data is detected and identifying an error-containing portion of the encoded video data;
in response to the detection of an error, altering encoded video data within the identified error-containing portion and attempting to decode the altered encoded video data,
repeating the data alteration step within the error-containing portion until either all the encoded video data within the error containing portion is decoded or until an attempt to decode the encoded video data within the error containing portion is unsuccessful.

2. A method of decoding an encoded video signal comprising:
receiving encoded video data;
decoding the encoded video data until a first error in the encoded video data is detected and identifying an error-containing portion of the encoded video data;
in response to the detection of an error, altering encoded video data within the identified error-containing portion and attempting to decode the altered encoded video data,
repeating the data alteration step within the error-containing portion until either all the encoded video data within the error containing portion is decoded or until an attempt to decode the encoded video data within the error containing portion is unsuccessful.

3. A method according to claim 1 or 2 wherein when a first error is detected, decoding the encoded video data from the opposite end of the bit stream until a second error is detected, the error-containing portion being identified as occurring between the first and the second error detection.

4. A method according to any of claims 1 to 3 wherein the encoded video data is encoded using a reversible code.

5. A method according to claim 4 wherein the code is a reversible variable length code.

6. A method according to claim 4 or 5 wherein the code is a symmetrical code.

7. A method according to any preceding claim wherein the video data is encoded in segments.

8. A method according to any preceding claim wherein the video data is encoded in a digital format and the alteration step comprises changing the value of a bit in the video data.

9. A method according to claim 8 wherein the video data is encoded in a binary format and the alteration step comprises changing the value of a bit in the video data from a 1 to a 0 or vice versa.

10. A system of video processing comprising:
an input for receiving video data;
an encoder for encoding the video data;
a decoder arranged to:
decode the encoded video data until a first error in the encoded video data is detected;
identify an error-containing portion of the encoded video data;
in response to the detection of an error, alter encoded video data within the identified error-containing portion and attempt to decode the altered encoded video data,
repeat the data alteration step within the error-containing portion until either all the encoded video data within the error containing portion is decoded or until an attempt to decode the encoded video data within the error containing portion is unsuccessful.

11. A video decoder arranged to:
decode the encoded video data until a first error in the encoded video data is detected;
identify an error-containing portion of the encoded video data;
in response to the detection of an error, alter encoded video data within the identified error-containing portion and attempt to decode the altered encoded video data,
repeat the data alteration step within the error-containing portion until either all the encoded video data within the error containing portion is decoded or until an attempt to decode the encoded video data within the error containing portion is unsuccessful.

12. A decoder according to claim 11 wherein when a first error is detected, the decoder is arranged to decode the encoded video data from the opposite end of the bit stream until a second error is detected, the error-containing portion occurring between the first and second error detection.

13. A decoder according to claim 11 or 12 wherein the encoded video data is encoded using a reversible code.

14. A decoder according to claim 13 wherein the code is a reversible variable length code.

15. A decoder according to claim 13 or 14 wherein the code is a symmetrical code.

16. A decoder according to any of claims 11 to 15 wherein the video data is encoded in segments.

17. A decoder according to any of claims 11 to 16 wherein the video data is encoded in a digital format and the alteration step comprises changing the value of a bit in the video data.

18. A decoder according to claim 17 wherein the video data is encoded in a binary format and the alteration step comprises changing the value of a bit in the video data from a 1 to a 0 or vice versa.
